**Europäisches Patentamt**

**European Patent Office**

**Office Européen des brevets**

(19)

(11) Veröffentlichungsnummer: **0 271 646 B1**

# EUROPÄISCHE PATENTSCHRIFT

(12)

(45) Veröffentlichungstag der Patentschrift:
02.01.91 Patentblatt 91/01

(51) Int. Cl.$^5$: **G01B 11/30, G01B 11/24**

(21) Anmeldenummer: 87113658.6

(22) Anmeldetag: 18.09.87

(54) Vorrichtung zur berührungsfreien Messung eines Abstandes von einer Oberfläche, insbesondere zur Abtastung einer Kontur einer Oberfläche eines Werkstückes länges eines Messweges.

Die Akte enthält technische Angaben, die nach dem Eingang der Anmeldung eingereicht wurden und die nicht in dieser Patentschrift enthalten sind.

(30) Priorität: 19.12.86 DE 3643500
11.06.87 DE 3719422

(43) Veröffentlichungstag der Anmeldung:
22.06.88 Patentblatt 88/25

(45) Bekanntmachung des Hinweises auf die Patenterteilung:
02.01.91 Patentblatt 91/01

(84) Benannte Vertragsstaaten:
CH FR GB IT LI SE

(56) Entgegenhaltungen:
EP-A- 0 070 141
EP-A- 0 177 038
DE-A- 3 231 719
DE-A- 3 342 675
DE-A- 3 540 596

(73) Patentinhaber: Hommelwerke GmbH
Alte Tuttlinger Strasse 20
D-7730 VS-Schwenningen (DE)

(72) Erfinder: Ulbers, Gerd, Dr.
Lindenbaumstrasse 20
D-7730 VS-Weilersbach (DE)
Erfinder: Hutter, Karl, Dipl.-Ing.
Ortholzweg 11
D-7730 VS-Mühlhausen (DE)

(74) Vertreter: Leine, Sigurd, Dipl.-Ing. et al
LEINE & KÖNIG Patentanwälte
Burckhardtstrasse 1
D-3000 Hannover 1 (DE)

**Beschreibung**

Die Erfindung betrifft eine Vorrichtung der im Oberbegriff des Anspruchs 1 genannten Art zur berührungsfreien Messung eines Abstandes von einer Oberfläche.

Durch den Prospekt ET-30 der Firma Kosaka Laboratory Ltd. ist es bekannt, den Abstand einer Oberfläche von einem optoelektronischen Meßkopf mit Hilfe eines in dem Meßkopf angeordneten Fokuslagenmeßsystems zu messen, wobei der Meßkopf parallel zu der Oberfläche bewegt und das Ausgangssignal des Fokuslagenmeßsystems grafisch aufgetragen wird. Die Einzelheiten eines derartigen Fokuslagenmeßsystems sind z.B. aus der Zeitschrift "LASER MAGAZIN", 4/85, S. 75, bekannt, wo dieses System in Verbindung mit der Abtastung optischer Schallplatten beschrieben ist. Aus der zuvor genannten Schrift der Firma Kosaka ist zu ersehen, daß der Meßbereich eines solchen Fokuslagenmeßsystems maximal 2 µm beträgt. Dieser Meßbereich reicht häufig nicht aus, wenn durch Bewegung des Meßkopfes parallel zur Oberfläche die Rauhigkeit der Oberfläche abgetastet werden soll, weil die Rauhigkeit häufig mehr als 2 µm beträgt. Außerdem ergibt sich bei der Anwendung dieses an sich für die Rauhigkeitsmessung gut geeigneten Fokuslagenmeßsystems die Schwierigkeit, daß bei einer beliebigen Gestalt einer abzutastenden Oberfläche eines Werkstücks der Meßwert sehr schnell den Meßbereich überschreitet, so daß eine Messung nicht mehr möglich ist, es sei denn, daß in komplizierter Weise eine Nachführung erfolgt.

Durch die Schrift "Quantitative Micro-Surface Measurement Systems" der Firma WYKO Corporation, 2990 E. Fort Lowell, Tucson, Arizona, USA, ist ein Meßsystem zur Profilbestimmung einer Oberfläche bekannt. Dieses System weist im wesentlichen ein Interferometer auf, bei dem Licht auf die zu messende Oberfläche fokussiert und das zurückgeworfene Licht mit dem Licht verglichen wird, das von einer festen Bezugsoberfläche reflektiert worden ist. Es wird die Interferenz zwischen dem Licht festgestellt, das von der zu messenden Oberfläche reflektiert worden ist, und dem Licht, das von der Bezugsoberfläche reflektiert worden ist. Ein solches Profilmeßgerät hat auch nur einen sehr kleinen Meßbereich, jedoch ist die Auswertung des Meßsignals kompliziert und aufwendig.

Durch die EP-A-0 070 141 ist ein Verfahren zur Messung der Abmessungen eines Werkstücks in einer Koordinaten-Meßmaschine bekannt, bei der ein Strahl in einer bestimmten Richtung in einem Winkel zu einer zu messenden Oberfläche aus einem Meßkopf austritt. Der Meßkopf hat ein Gehäuse, das so angeordnet ist, daß es nicht mit einem durch die zu messende Oberfläche gebildeten Vorsprung von einer weiteren Oberfläche kollidiert, derart, daß sich der Meßkopf frei an dem Vorsprung vorbeibewegen kann und die Messung ausgeführt werden kann, ohne daß die Maschine an der zu messenden Oberfläche angehalten wird. Der von dem Meßkopf ausgesandte Strahl trifft auf die zu messende Oberfläche und gelangt auf anderem Wege zurück in den Meßkopf. Von dort gelangt er zu Fotodioden, die bei Vorbeibewegen des Meßkopfes an einer zu messenden Oberfläche ein Meßsignal abgeben. Auf diese Weise ist es möglich, fliegend z.B. den Abstand einer größeren Zahl von Löchern in einer Platte festzustellen. Zur fliegenden Bewegung des Meßkopfes wird dieser durch drei jeweils für sich angetriebene Wagen bewegt, deren Bewegung durch Zähler festgestellt werden. Trifft der Meßstrahl aus dem Meßkopf bei einer solchen fliegenden Bewegung auf eine Meßfläche, z.B. den Rand eines Loches, so wird diese Lage des Randes des Loches durch die Zähler an dem Wagen festgehalten. Das Signal des Meßkopfes als solches geht nicht in die Messung ein.

Der Erfindung liegt die Aufgabe zugrunde, eine Vorrichtung der betreffenden Art zur berührungsfreien Messung eines Abstandes von einer Oberfläche zu schaffen, die die Genauigkeit eines Fokuslagenmeßsystems und jedoch einen vergrößerten Meßbereich hat, also gleichzeitig eine Messung der Rauhigkeit einer Oberfläche mit hoher Genauigkeit und die Messung eines Grobprofils der zu messenden Oberfläche ermöglicht.

Die der Erfindung zugrundeliegende Aufgabe wird durch die Merkmale des Anspruchs 1 gelöst.

Der Grundgedanke der erfindungsgemäßen Lehre besteht darin, zur Messung der Rauhigkeit der Oberfläche ein Fokuslagenmeßsystem mit hoher Genauigkeit zu verwenden und die Nachteile des kleinen Meßbereichs dieses Systems dadurch zu vermeiden, daß der Meßkörper in Meßrichtung beweglich von einem Stativ gehalten ist und der Meßkörper so bewegt wird, daß das Fokuslagenmeßsystem immer in seinem Meßbereich bleibt. Dies erfolgt mit Hilfe einer optoelektronischen Lageabtasteinrichtung, vorzugsweise eines Interferometers, das die jeweilige Bewegungslage des Meßkörpers in bezug zu dem diesen haltenden Stativ feststellt, so daß ganz einfach durch Addition der durch die Ausgangssignale des Fokuslagenmeßsystems und des Interferometers repräsentierten Längen der Absolutabstand der zu messenden Oberfläche von dem Meßkörper gewonnen wird und zur Anzeige und Aufzeichnung gebracht werden kann.

Bei dem Meßkörper kann es sich um ein verschieblich gelagertes Gehäuse handeln. Besonders zweckmäßig ist es aber, wenn gemäß einer Weiterbildung der Erfindung der Meßkörper durch ein das Fokuslagenmeßsystem haltende Ende eines vorzugsweise doppelarmigen Hebels gebildet ist. Durch die Anbringung des Fokuslagenmeßsystems unmittelbar am Ende des als Tastarm wirkenden Hebels werden weitere optische Mittel, wie Spiegel, Linsen oder dergleichen, überflüssig, die die Trägheit des Tastarmes beträchtlich erhöhen würden.

An sich ist es möglich, die Verstellung des Meßkörpers zu dem Stativ von Hand vorzunehmen, es ist jedoch zweckmäßig, dies automatisch mit Hilfe einer Antriebsvorrichtung durchzuführen, die von dem Signal des Fokuslagenmeßsystems in einem solchen Sinn gesteuert wird, daß das Fokuslagenmeßsystem niemals seinen Meßbereich überschreitet.

Eine Möglichkeit der automatischen Verstellung des Meßkörpers ist im Anspruch 3 angegeben. Dabei wird ein Stellmotor verwendet, der in Abhängigkeit von dem Ausgangssignal des Fokuslagenmeßsystems in einem Sinn und in einem Maß gesteuert wird, daß der Meßwert des Fokuslagenmeßsystems verkleinert wird, also immer innerhalb des Meßbereiches liegt.

Eine andere Möglichkeit, die zusätzlich zu der zuvor genannten anwendbar ist, ist im Anspruch 4 angegeben. Bei dieser Ausführungsform wird der Meßkörper schwingend mittels eines Schwingantriebes angetrieben, so daß er ständig einen Teil seines Meßbereiches durchläuft. Die Steuerung des Stellantriebes für den Meßkörper kann dabei in verschiedener Weise erfolgen. Eine Möglichkeit besteht darin, die Verstellung so durchzuführen, daß der Meßwert des Fokuslagenmeßsystems immer genau um den Nullwert pendelt. Es ist aber auch möglich, jeden anderen beliebigen Wert des Ausgangssignales des Fokuslagenmeßsystems als Kriterium dafür zu verwenden, daß das Summensignal von Fokuslagenmeßsystem und Interferometer zur Anzeige oder zur Aufzeichnung gebracht wird. Der Schwingantrieb für den Meßkörper kann z.B. nach Art des Antriebes der Schwingspule eines dynmaischen Lautsprechers ausgebildet sein.

Anhand der Zeichnung soll die Erfindung an einem Ausführungsbeispiel näher erläutert werden.

Fig. 1 zeigt schematisch ein Ausführungsbeispiel der erfindungsgemäßen Vorrichtung zur Abtastung eines Oberflächenprofiles eines Werkstückes,

Fig. 2 zeigt die optoelektronische Einrichtung des bei der Vorrichtung nach Fig. 1 verwendeten Meßkörpers von der Seite,

Fig. 3 zeigt die optoelektronische Einrichtung gemäß Fig. 2 von der einen Seite mit dem Interferometer,

Fig. 4 zeigt die optoelektronische Einrichtung gemäß Fig. 2 von der anderen Seite mit dem Fokuslagenmeßsystem,

Fig. 5 zeigt ein Blockschaltbild des elektrischen Teils der Vorrichtung gemäß Fig. 1, und

Fig. 6 zeigt schematisch ein zweites Ausführungsbeispiel der Erfindung.

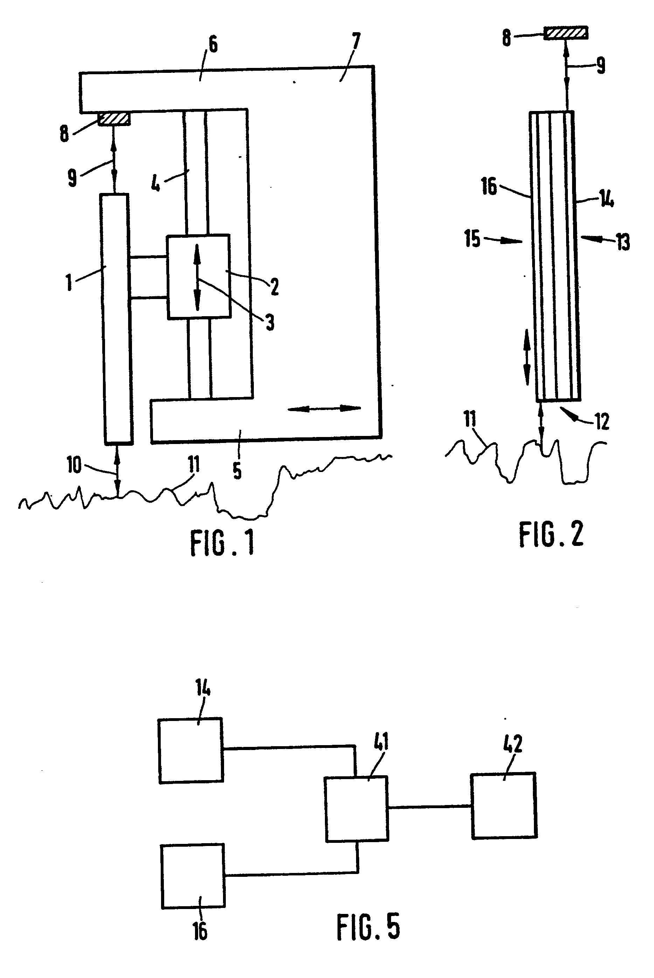

Das in Fig. 1 gezeigte Ausführungsbeispiel der Erfindung weist einen Meßkörper 1 auf, der an einem Führungsteil 2 befestigt ist, das in Richtung eines Doppelpfeiles 3 auf einem stangenförmigen Stativ 4 verschieblich gehalten ist. Das stangenförmige Stativ 4 ist oben und unten mit Fortsätzen 5 und 6 eines Stativkörpers 7 verbunden.

An dem Fortsatz 6 des Stativkörpers 7 befindet sich ein Spiegel 8 zur Reflexion eines aus dem Meßkörper 1 nach oben austretenden Lichtstrahles 9 in den Meßkörper 1 zurück. Nach unten tritt aus dem Meßkörper 1 ein Lichtstrahl 10 aus, der auf eine zu messende Oberfläche 11 eines Werkstückes gerichtet ist und von dieser in den Meßkörper 1 reflektiert wird. Der Lichtstrahl 9 gehört zu einem in dem Meßkörper 1 angeordneten Interferometer, und der Lichtstrahl 10 gehört zu einem in dem Meßkörper 1 angeordneten Fokuslagenmeßsystem.

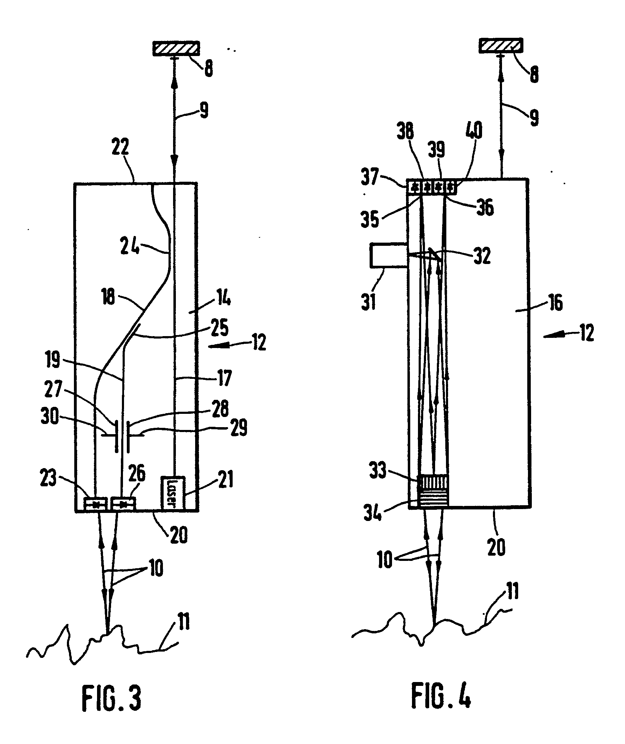

Fig. 2 zeigt eine in dem Meßkörper 1 angeordnete optoelektronische Einrichtung 12, die im wesentlichen aus einem Substrat besteht, auf dessen einer Oberfläche 13 ein Interferometer 14 und auf dessen anderer Oberfläche 15 ein Fokuslagenmeßsystem 16 gebildet ist. Aus dem Interferometer 14 tritt nach oben der in Verbindung mit Fig. 1 bereits erwähnte Lichtstrahl 9 aus, der auf den Spiegel 8 trifft. Aus dem Fokuslagenmeßsystem 16 tritt der in Verbindung mit Fig. 1 bereits erwähnte Lichtstrahl 10 aus. Zur Vervollständigung ist auch die zu messende Oberfläche 11 eines Werkstücks wieder angedeutet. Der Aufbau des Interferometers 14 ist in Fig. 3 und derjenige des Fokuslagenmeßsystems 16 in Fig. 4 prinzipiell dargestellt, die jeweils in etwas vergrößertem Maßstab Ansichten auf die Oberflächen 13 bzw. 15 zeigen.

In Fig. 3 ist in der lichtleitenden Oberflächenschicht der optoelektronischen Einrichtung 12, die aus Lithiumniobatkristall oder Siliziumkristall bestehen kann, ein Meßwellenleiter 17, ein Bezugswellenleiter 18 und ein Abzweigwellenleiter 19 gebildet. Der Meßwellenleiter 17 führt zu einer Kante 20, wo ein Laser 21 angebracht ist, der Licht in den Meßwellenleiter 17 wirft. An einer gegenüberliegenden Kante 22 tritt der Strahl aus dem Meßwellenleiter 17 aus und läuft in Form des Lichtstrahls 9 zu dem Spiegel 8, von dem er wieder in den Meßwellenleiter 17 zurückreflektiert wird.

Der Bezugswellenleiter 18 erstreckt sich zwischen den Kanten 20 und 22. Im Bereich der Kante 20 ist eine Fotodiode 23 angebracht, die so das Licht aus dem Bezugswellenleiter 18 auffängt und in ein entsprechendes elektrisches Signal umwandelt. Der Bezugswellenleiter 18 nähert sich über eine kurze Strecke dem Meßwellenleiter 17, so daß ein Koppelelement 24 gebildet ist.

Der Abzweigwellenleiter 19 nähert sich mit seinem Ende dem Bezugswellenleiter 18, so daß ein Koppelelement 25 gebildet ist. Mit seinem anderen Ende mündet der Abzweigwellenleiter 19 im Bereich einer dort angebrachten Fotodiode 26, die das Licht aus dem Abzweigwellenleiter 19 auffängt und in ein entsprechendes elektrisches Spannungssignal umwandelt. Über eine kurze Wegstrecke sind zu beiden Seiten des Abzweigwellenleiters 19 Elektroden 27 und 28 angeordnet, die über Leitungen 29 und 30 an eine einstellbare Gleichspannungsquelle angeschlossen sind, was rein schematisch durch ein Plusund Minuszeichen angedeutet ist. Durch Einstellung der Gleichspannung an den Elektroden 27 und 28 ist die Phasenlage des Lichts an der Fotodiode 26 gegenüber der des Lichts an der Fotodiode 23 so eingestellt, daß die Phase der elektrischen Spannung am Ausgang der Fotodiode 26 gegenüber der an der Fotodiode 23 um 90° verschoben ist.

Wird auch das zuvor geschilderte Interferometer 14 relativ zu dem Spiegel 8 in Meßrichtung des Lichtstrahls 9 verschoben, so ändert sich der Weg des Lichts in dem Lichtstrahl 9, wodurch sich das Interferenzmuster in dem Bezugswellenleiter 18 ändert, das proportional der Bewegung der optoelektronischen Einrichtung 12 ist und an der Fotodiode 23 als Änderung der Ausgangsspannung derselben erscheint.

In Fig. 4 ist die andere Oberfläche 15 mit dem Fokuslagenmeßsystem 16 der optoelektronischen Einrichtung 12 (Fig. 2) gezeigt. Die Oberfläche 15 ist in ihrer gesamten Ausdehnung als lichtleitende Schicht ausgebildet, so daß sich der Strahlengang gemäß Fig. 4 ausbilden kann. Ein Laser 31 ist seitlich angebracht und strahlt auf einen um 45° geneigten Spiegel 32, der das Licht auf Fokussiergitter 33 und 34 richtet, so daß die Lichtstrahlen 10 auf die zu messende Oberfläche 11 fokussiert werden, die dann, wie das durch Doppelpfeile angedeutet ist, in die Fokussiergitter 33 und 34 reflektiert werden, von denen das Fokussiergitter 33 als Strahlenteiler wirkt und jeweils die Hälfte des Lichts auf zwei verschiedene Fokuspunkte 35 und 36 fokussiert, die genau zwischen Fotodioden 37 und 38 einerseits und Fotodioden 39 und 40 andererseits liegen, wenn sich die Oberfläche 11 genau im Fokus der Lichtstrahlen 10 befindet. Die Ausgangssignale der Fotodioden 37 bis 40 werden hier in für die Erfindung nicht weiter bedeutsamer Weise zu einem Ausgangssignal des Fokuslagenmeßsystems 16 kombiniert.

Ändert sich der Abstand zwischen dem Fokuslagenmeßsystem 16 und der zu messenden Oberfläche 11 aufgrund einer Rauhigkeit oder Konturänderung der Oberfläche 11, so ändert sich auch die Fokuslage und entsprechend das Ausgangssignal der Fotodioden 37 bis 40 und damit des gesamten Fokuslagenmeßsystems 16.

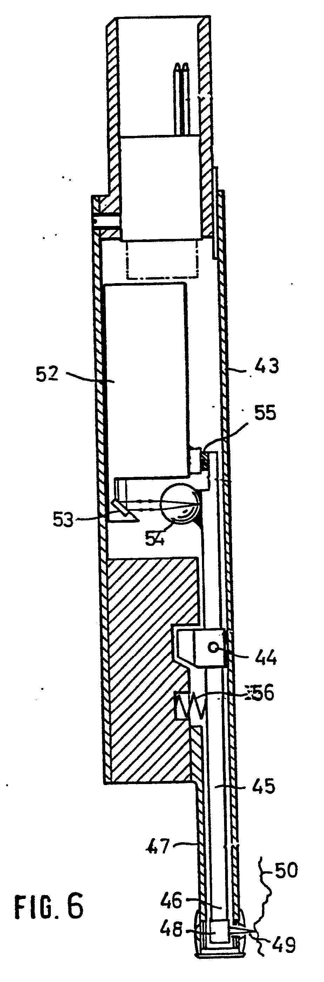

Aus dem Blockschaltbild gemäß Fig. 5 ist zu ersehen, daß die Ausgänge des Interferometers 14 und des Fokuslagenmeßsystems 16 an einen Addierer 41 angeschlossen sind, wo die jeweiligen Ausgangssignale addiert werden, so daß ein Gesamtmeßsignal entsteht, das in eine Anzeige- oder Schreibeinrichtung 42 gelangt. Da das Ausgangssignal des Interferometers 14 der jeweiligen Schiebelage des Meßkörpers 1, also seiner absoluten Lage, und das Ausgangssignal des Fokuslagenmeßsystems 16 dem Abstand des Meßkörpers zu dem jeweils eingestellten Punkt auf der zu messenden Oberfläche 11 entspricht, entspricht das Summensignal am Ausgang des Addierers 41 jeweils der Summe der durch die Lichtstrahlen 9 und 10 repräsentierten Längen, so daß insgesamt unabhängig von der Schiebelage des Meßkörpers 1 ein Längenmaß gebildet ist, das den absoluten Abstand des Meßpunktes, also des Auftreffpunktes des Lichtstrahls 10 auf die Oberfläche 11 in bezug zu dem Meßspiegel 8 angibt. Es ist nun leicht möglich, durch jeweiliges Verschieben oder Nachführen des Meßkörpers 1 in Richtung des Doppelpfeiles 3 zu erreichen, daß das in seinem Meßbereich enge Fokuslagenmeßsystem 16 niemals aus seinem Meßbereich herauskommt. Trotzdem wird mit großer Genauigkeit immer über große Meßwege hinweg der Abstand des jeweiligen Meßpunktes auf der Oberfläche 11 absolut angezeigt, also in bezug zu dem Spiegel 8.

Ein mechanischer Antrieb zur Verschiebung des Führungsteils 2 und damit des Meßkörpers 1 und dessen Steuerung in Abhängigkeit von dem Erreichen oder Überschreiten von Grenz werten des Meßbereichs des Fokuslagenmeßsystems ist nicht dargestellt, da diese einfachen Maßnahmen für jeden Fachmann auf der Hand liegen.

Fig. 6 zeigt schematisch ein zweites Ausführungsbeispiel, bei dem in einem zylindrischen Gehäuse 43 um eine Achse 44 drehbar ein doppelarmiger Hebel 45 angeordnet ist, dessen eines Ende 46 sich in eine rohrförmige Verlängerung 47 des Gehäuses 43 erstreckt und ein kleines Fokuslagenmeßsystem 48 hält, das durch Linien 49 angedeutetes Licht fokussiert auf eine zu messende Kontur 50 der Oberfläche eines Werkstückes wirft. Dieses Fokuslagenmeßsystem kann z.B. die Ausführungsform gemäß Fig. 4 haben. Das Licht des Fokuslagenmeßsystems 48 tritt durch eine Öffnung 51 in der rohrförmigen Verlängerung 47 aus.

Die Schwenklage des doppelarmigen Hebels 45 wird durch ein Interferometer 52 abgetastet, das die Ausführungsform gemäß Fig. 3 haben kann. Es ist aus Gründen der Miniaturisierung in Längsrichtung des rohrförmigen Gehäuses 43 angeordnet, wobei das austretende Licht durch einen Spiegel 53 umgelenkt und auf eine kleine Glaskugel 54 gerichtet wird, die an dem Hebel 45 befestigt ist und dem Spiegel 8 des Interferometers gemäß Fig. 3 entspricht.

Benachbart zu der Glaskugel 54 greift an dem Ende des doppelarmigen Hebels 45 eine elektrodynamische, nur schematisch dargestellte Antriebseinrichtung 55 an, die den doppelarmigen Hebel 45 entgegen der Kraft einer Feder 56 verstellt. Die elektrodynamische Antriebseinrichtung 55 wird in Abhängigkeit von dem Ausgangssignal des Fokuslagenmeßsystems 48 so gesteuert, daß sich dieses immer in seinem normalen Arbeitsbereich befindet.

## Ansprüche

1. Vorrichtung zur berührungsfreien Messung eines Abstandes von einer Oberfläche, insbesondere zur Abtastung einer Kontur einer Oberfläche eines Werkstücks längs eines Meßweges, mit einem Meßkörper, in dem eine optoelektronische Einrichtung angeordnet ist, die dazu dient, Licht auf die zu messende Oberfläche zu werfen und mittels des von dieser Oberfläche reflektierten Lichtes ein von dem Abstand von der Oberfläche abhängiges elektrisches Signal zu erzeugen, wobei

- der Meßkörper (1, 46) in Meßrichtung bewegbar von einem Stativ (4, 43) gehalten ist,

- die optoelektronische Einrichtung (12, 48) ein Fokuslagenmeßsystem (16, 48) sowie eine optoelektronische Lageabtasteinrichtung (14, 52) zur Abtastung der Lage des Meßkörpers (1, 46) in Bezug zu dem Stativ (4, 43) aufweist, und

- ein mit einer Anzeige- oder Schreibeinrichtung (42) verbundener Addierer (41) vorgesehen ist, die so ausgebildet sind, daß das elektrische Ausgangssignal des Fokuslagenmeßsystems (16) und das elektrische Ausgangssignal der Lageabtasteinrichtung (14) in dem Addierer (41) addiert und so ein Summensignal gebildet wird, das in der Anzeige- oder Schreibeinrichtung (47) als Abstand des Meßkörpers (1, 46) von der zu messenden Oberfläche (11, 50) in eine Bewegungslage des Meßkörpers (1, 46) zu dem Stativ (4, 43) angezeigt wird, in der sich das Fokuslagenmeßsystem in seinem Meßbereich befindet.

2. Vorrichtung nach Anspruch 1, **dadurch gekennzeichnet,** daß der Meßkörper durch ein das Fokuslagenmeßsystem (48) haltende Ende (46) eines vorzugsweise doppelarmigen Hebels (45) gebildet ist.

3. Vorrichtung nach Anspruch 1, **dadurch gekennzeichnet,** daß eine Positioniereinrichtung, insbesondere ein Stellmotor, vorgesehen ist, der den Meßkörper (1) in Meßrichtung oder entgegengesetzt dazu verstellt, wenn das Fokuslagenmeßsystem (16) einen bestimmten Wert seines Meßbereichs überschreitet, um den Meßwert des Fokuslagenmeßsystems (16) zu verkleinern.

4. Vorrichtung nach Anspruch 1 oder 3, **dadurch gekennzeichnet,** daß der Meßkörper (1) mit einem Schwingantrieb verbunden ist, der den Meßkörper (1) in Meßrichtung hin- und herschwingend antreibt, und daß zwischen dem Addierer (41) und der Anzeige- oder Schreibeinrichtung (42) eine Schalteinrichtung vorgesehen ist, die von dem Ausgangssignal des Fokuslagenmeßsystems (16) gesteuert ist und jedesmal dann, wenn dieses Ausgangssignal einen vorbestimmten Wert, vorzugsweise null, hat, das Summensignal des Addierers (41) zu der Anzeige- oder Schreibeinrichtung (42) durchschaltet.

5. Vorrichtung nach Anspruch 4, **dadurch gekennzeichnet,** daß der Schwingantrieb für den Meßkörper (1) nach Art des Antriebs der Membran eines dynamischen Lautsprechers mittels einer in einem Permanentmagnetfeld beweglichen Schwingspule ausgebildet ist.

6. Vorrichtung nach Anspruch 1, **dadurch gekennzeichnet,** daß ein Stellmotor oder eine andere Positioniereinrichtung vorgesehen ist, der bzw. die den Meßkörper in Meßrichtung in vorgegebenen, definierten Schritten verstellt, um Profile, die den Meßbereich überschreiten, mäanderförmig abtasten zu können.

7. Vorrichtung nach Anspruch 1, 2 und 5, **dadurch gekennzeichnet,** daß für die eindeutige Zuordnung der mäanderförmigen Abtastlinien ein hochauflösendes Wegmeßsystem, z.B. ein Glasmaßstab, vorgesehen ist.

8. Vorrichtung nach Anspruch 1, **dadurch gekennzeichnet,** daß die optoelekronische Lageabtasteinrichtung ein optisches Interferometer (14) ist, das an dem Meßkörper (1, 46) oder dem Stativ (4, 43) angeordnet ist und einen Meßwellenleiter (17) aufweist, dessen eines Ende mit einem Laser (21) und dessen anderes Ende mit einer optischen Einrichtung verbunden ist, die das Licht entgegengesetzt zur Meßrichtung des Fokuslagenmeßsystems (16) auf einen fest an dem Stativ (4, 43) bzw. an dem Meßkörper (1, 46) angeordneten Reflektor, insbesondere Spiegel (8, 54) richtet, der das Licht in den Meßwellenleiter (17) zurückwirft, und daß das Interferometer (14) einen Bezugswellenleiter (18) aufweist, der mit dem Meßwellenleiter (17) gekoppelt ist und an dessen einem Ende eine Fotodiode (23) und an dessen anderem Ende ein Spiegel angeordnet ist.

9. Vorrichtung nach Anspruch 1, **dadurch gekennzeichnet,** daß das Fokuslagenmeßsystem (16) einen Laser (31) aufweist, dessen Licht unmittelbar auf die zu messende Oberfläche (11) über eine erste Fokussiereinrichtung (34) gerichtet ist, der eine zweite Fokussiereinrichtung (33) nachgeschaltet ist, die das reflektierte Licht auf zwei benachbarte Fotodioden (38, 38 bzw. 30, 40) fokussiert, die ein von dem Grad der Fokussierung und damit von dem Abstand des Meßkörpers (1) von der zu messenden Oberfläche (11) abhängiges elektrisches Ausgangssignal erzeugen.

## Claims

1. A device for non-contact measurement of a distance from a surface, in particular for scanning the contour of a workpiece along a measuring track, having a measuring body in which an optoelectronic device is arranged, which serves to throw light onto the surface to be measured and by means of the light reflected from the said surface to generate an electrical signal dependent upon the distance from the surface, where :

- the measuring body (1, 46) is supported by a stand (4, 43) to be movable in the direction of measurement ;

- the optoelectronic device (12, 48) exhibits a focal position measuring system (16, 48) as well as an optoelectronic position-sensing device (14, 52) for sensing the position of the measuring body (1, 46) with respect to the stand (4, 43) ; and

- an adder (41) connected to an indicator or recorder (42) is provided and so constructed that the electrical output signal from the focal position measuring system (16) and the electrical output signal from the position-sensing device (14) are added in the adder (41) and thus a total signal is formed which is indicated in the indicator or recorder (47) as the distance of the measuring body (1, 46) from the surface (11, 50) to be measured, in a position of movement of the measuring body (1, 46) with respect to the stand (4, 43), in which the focal position measuring system is lying within its range of measurement.

2. A device as in Claim 1, **characterized in** that the measuring body is formed by one end (46) holding the focal position measuring system (48), of a preferably two-armed lever (45).

3. A device as in Claim, **characterized in** that a positioning device, in particular a positioning motor is provided which adjusts the measuring body (1) in the direction of measurement or the opposite, if the focal position measuring system (16) oversteps a certain value in its range of measurement, in order to reduce the value measured by the focal position measuring system (16).

4. A device as in Claim 1 or 3, **characterized in** that the measuring body (1) is connected to an oscillating drive which drives the measuring body (1) in an oscillation to and fro in the direction of measurement, and that between the adder (41) and the indicator or recorder (42) a switching equipment is provided which is controlled by the output signal from the focal position measuring system (16) and every time the said output signal has a predetermined value, preferably zero, switches the total signal from the adder (41) through to the indicator or recorder (42).

5. A device as in Claim 4, **characterized in** that the oscillating drive for the measuring body (1) is made after the style of the diaphragm drive of a dynamic loudspeaker by means of a moving coil movable in the field from a permanent magnet.

6. A device as in Claim 1, **characterized in** that a positioning motor or some other positioning device is provided, which adjusts the measuring body in the direction of measurement in definite predetermined steps in order to be able to scan in a meander pattern profiles which overstep the range of measurement.

7. A device as in Claim 1, 2 and 5, **characterized in** that for clear association of the meander-pattern scanning lines a highresolution travel-measuring system, e.g., a glass scale, is provided.

8. A device as in Claim 1, **characterized in** that the optoelectronic position-sensing device is an optical interferometer (14) which is arranged on the measuring body (I, 45) or the stand (4, 43) and exhibits a measuring waveguide (17) of which one end is connected to a laser (21) and the other to an optical device which directs the light against the direction of measurement of the focal position measuring system (16) at a reflector, in particular a mirror (8, 54) which is arranged fixed to the stand (4, 43) or to the measuring body (1, 46) and throws the light back into the measuring waveguide (17), and that the interferometer (14) exhibits a reference waveguide (18) which is coupled to the measuring waveguide (17) and has a photodiode (23) arranged at one end of it and a mirror at the other.

9. A device as in Claim 1, **characterized in** that the focal position measuring system (16) exhibits a laser (31) the light from which is directed directly at the surface (11) to be measured, via a first focusing device (34) which has connected after it a second focusing device (33) which focuses the reflected light onto two adjacent photodiodes (37, 38 resp. 39,40) which generate an electrical output signal dependent upon the intensity of the focusing and thereby upon the distance of the measuring body (1) from the surface to be measured.

**Revendications**

1. Dispositif de mesure sans contact d'une distance d'une surface, en particulier pour palper un contour d'une surface d'une pièce d'oeuvre le long d'une trajectoire de mesure, avec un corps de mesure dans lequel est disposé un dispositif optoélectronique qui sert à envoyer de la lumière sur la surface à mesurer et à générer, au moyen de la lumière réfléchie par cette surface, un signal électrique dépendant de la distance de la surface, dans lequel

- le corps de mesure (1, 46) est maintenu mobile en direction de mesure sur un support (4, 43),

- le dispositif optoélectronique (12, 48) présente un système de mesure de la position du foyer (16 48) ainsi qu'un dispositif de palpation de position (14, 52) pour palper la position du corps de mesure par rapport au support (4, 43) et

- un additionneur (41) relié à un dispositif d'affichage ou d'inscription (42) est prévu qui est construit de telle manière que le signal électrique de sortie du sytème de mesure de la position du foyer (16) et le signal électrique de sortie du dispositif de palpation de position (14) sont additionnés dans l'additionneur (41) et qu'ainsi est formé un signal de sommation qui est affiché dans le dispositif d'affichage ou d'inscription (47) en tant que distance du corps de mesure (1, 46) à la surface à mesurer (11, 50) dans une position de déplacement du corps de mesure (1,46) par rapport au support dans laquelle le système de mesure de la position du foyer se trouve dans sa plage de mesure.

2. Dispositif selon la revendication 1, caractérisé en ce que le corps de mesure est formé par une extrémité (46) d'un levier (45), de préférence à deux bras, qui tient le système de mesure de la positon du foyer (48).

3. Dispositif selon la revendication 1, caractérisé en ce qu'est prévu un dispositif de positionnement, en particulier un servomoteur qui déplace le corps de mesure (1) en direction de mesure ou à l'opposé de celle-ci lorsque le système de mesure de la position du foyer (16) dépasse une valeur déterminée de sa plage de mesure afin de diminuer la valeur mesurée du système de mesure de la position du foyer (16).

4. Dispositif selon la revendication 1 ou 3, caractérisé en ce que le corps de mesure est relié à un entraînement oscillant qui entraîne le corps de mesure (1) en va-et-vient en direction de mesure, et qu'un dispositif commutateur est prévu entre l'additionneur (41) et le dispositif d'affichage ou d'inscription (42), qui est commandé par le signal de sortie du système de mesure de la position du foyer (16) et qui connecte le signal sommateur de l'additionneur (41) au dispositif d'affichage ou d'inscription (42) chaque fois que ce signal de sortie a une valeur prédéterminée, de préférence zéro.

5. Dispositif selon la revendication 4, caractérisé en ce que l'entraînement oscillant pour le corps de mesure (1) est construit selon le type de l'entraînement de la membrane d'un haut-parleur dynamique au moyen d'une bobine mobile se déplaçant dans un champ magnétique permanent.

6. Dispositif selon la revendication 1, caractérisé en ce qu'est prévu un servomoteur ou un autre dispositif de positionnement qui déplace le corps de mesure en direction de mesure selon des pas définis prédéterminés, afin de pouvoir palper en forme de méandres des profils qui dépassent la plage de mesure.

7. Dispositif selon la revendication 1, 2 et 5, caractérisé en ce qu'on prévoit un système de mesure de déplacement à haute résolution, par exemple une règle graduée en verre, pour l'affectation univoque des lignes de palpation en forme de méandres.

8. Dispositif selon la revendication 1, caractérisé en ce que le dispositif de palpation de position optoélectronique est un interféromètre optique (14) qui est disposé sur le corps de mesure (1, 46) ou le support (4, 43) et présente un guide d'ondes de mesure (17) dont une extrémité est reliée à un laser (21) et l'autre à un dispositif optique qui dirige la lumière en sens opposé à la direction de mesure sur un réflecteur, en particulier un miroir (8, 54) disposé sur le support (4, 43) ou sur le corps de mesure (1, 46), qui renvoie la lumière dans le guide d'ondes de mesure (17), et que l'interféromètre (14) présente un guide d'ondes de référence (18) qui est compté au guide d'ondes de mesure (17) et à une extrémité duquel est disposée une photodiode (23) et à l'autre extrémité un miroir.

9. Dispositif selon la revendication 1, caractérisé en ce que le système de mesure de la position du foyer (16) présente un laser (31) dont le rayonnement est dirigé immédiatement sur la surface (11) à mesurer par l'intermédiaire d'un premier dispositif de focalisation (34), auquel est intercalé à la suite un second dispositif de focalisation (33) qui focalise le rayonnement réfléchi sur deux photodiodes adjacentes (37, 38 ou 39 , 40) qui émettent un signal électrique de sortie dépendant du taux de focalisation et, de ce fait, de la distance du corps de mesure (1) à la surface (11) à mesurer.

FIG. 1

FIG. 2

FIG. 5

FIG.3

FIG.4

FIG. 6